# EUROPÄISCHE PATENTSCHRIFT

(11) **EP 2 168 692 B1**
(45) Veröffentlichungstag und Bekanntmachung des Hinweises auf die Patenterteilung: **08.06.2011**
(21) Anmeldenummer: 09012105.4
(22) Anmeldetag: 23.09.2009
(51) Int. Cl.: B07B 1/00, B65G 41/00

(54) **Trennvorrichtung für Aufgabegut**
Separating device for dispensed products
Dispositif de séparation pour des matériaux de chargement

(30) Priorität: 29.09.2008 DE 202008012925 U
(43) Veröffentlichungstag der Anmeldung: 31.03.2010
(73) Patentinhaber: Komptech Umwelttechnik Deutschland GmbH, 59302 Oelde (DE)
(72) Erfinder: Thielepape, Bernd, 31675 Bückeburg (DE); Druffel, Wilfried, 59329 Wadersloh (DE)
(74) Vertreter: Laufhütte, Dieter

(56) Entgegenhaltungen:
- EP-A- 1 577 023
- DE-A1- 3 018 394
- DE-A1- 3 720 490
- US-A- 4 256 572
- US-A- 6 006 921
- US-B1- 6 543 622

## Beschreibung

Die Erfindung betrifft eine verfahrbare Vorrichtung zur Trennung von Aufgabegut, insbesondere Schüttgut, nach dem Oberbegriff des Anspruchs 1.

Insbesondere betrifft die Erfindung eine mobile Trommelsiebmaschine, die beispielsweise als Anhänger verfahrbar ausgebildet ist. Derartige Trommelsiebmaschinen sind seit geraumer Zeit im Einsatz. Bezüglich der Beschreibung der aus dem Stand der Technik bekannten Trommelsiebmaschinen kann auf die DE 10 2004 012 778 A1 verwiesen werden.

Üblicherweise werden derartige Trommelsiebmaschinen dazu verwendet, bestimmte Auftragsarbeiten durchzuführen, beispielsweise das Trennen des Siebgutes in mindestens 2 Fraktionen (z. B. Kompostmaterial, Bauschutt). Üblicherweise werden die Trommelsiebmaschinen zu ihrem Einsatzort verfahren. Daher ist die mittels einer Antriebseinheit zu einer Drehbewegung antreibbare Siebtrommel auf einem eine Achseinheit aufweisenden Fahrwerk angeordnet. Der Siebtrommel vorgelagert ist üblicherweise ein Aufgabebunker zum Eingeben des zu bearbeitenden Siebgutes.

Bei derartigen mobilen Siebmaschinen ergeben sich Konstruktionseinschränkungen über die zulässigen Außenabmessungen der gesamten Maschine über die jeweils national gültige Straßenverkehrsordnung oder zulässigen Transportabmessungen. Bei Zugrundelegung der deutschen Straßenzulassungsverkehrsordnung (StZVO) sind folgende Abmessungen zulässig:

Bei einem Zentralachsanhänger ergeben sich It. StZVO folgende Abmessungen:
- Länge: 12.000 mm
- Breite: 2.550 mm
- Höhe: 4.000 mm

Bei einem Sattelauflieger ergeben sich laut StZVO folgende Abmessungen:
- Länge: 13.600 mm
- Breite: 2.550 mm
- Höhe: 4.000 mm

Grundsätzlich kann bis zu einer Transportbreite von weniger als 3.000 mm der Transport abgewickelt werden, ohne hier einen Sondertransport mit Begleitfahrzeug darzustellen.

Diese maximale Abmessung hat zur Folge, dass der größtmöglich funktionssichere Siebtrommeldurchmesser begrenzt ist. Da noch ein Abstand zwischen der Siebtrommel zur Außenwand der verfahrbaren Vorrichtung freigehalten werden muß, damit das Siebgut bei größeren Lochungen nicht verklemmt und damit insbesondere neben der Siebtrommel noch das dort anzuordnende Austragsband plaziert werden kann, kann auf einem entsprechenden Vorrichtungsaufbau nur ein kleinerer Siebtrommeldurchmesser aufgebaut werden.

Die DE 37 20 490 A1 betrifft eine Siebvorrichtung, die auf ein mobiles Gestell gesetzt ist, das im Einsatz durch Stützen stabilisiert wird. Die Vorrichtung weist im einzelnen eine Siebtrommel, einen Beschickungstrichter mit einem Kettenförderband, einen Abweisrost sowie ein Wurfband mit Leitblechen auf. Weiterhin sind Entsorgungsbänder vorgesehen, die zum Fahrbetrieb mit Hilfe von Drehgelenken seitlich neben der Trommel abgelegt werden.

Eine weitere mögliche Ausführung einer Siebvorrichtung ist aus der US 6,006,921 bekannt. Die darin offenbarte Siebvorrichtung ist auf einem mobilen Gestell mit Achseinheit angeordnet. Im Bereich vor und nach der Siebtrommel ist jeweils ein Austragsband angeordnet, das jeweils faltbar ausgeführt ist.

Ein ähnlicher Lösungsansatz ist aus der US 6,543,622 B1 bekannt. Diese Vorrichtung weist ebenfalls endseitig klappbar angeordnete Förderbänder auf, die zum Abtransport des Siebgutes dienen.

Eine alternative Umsetzung einer Siebvorrichtung ist aus der US 4,256,572 bekannt. Diese Vorrichtung weist statt einer Siebtrommel ein rechteckiges Sieb auf.

Aufgabe der Erfindung ist es, eine verfahrbare Vorrichtung zur Trennung von Aufgabegut dahingehend zu verbessern, dass trotz Straßentauglichkeit der Siebtrommeldurchmesser zur Leistungssteigerung der Siebleistung bei voller Funktionstüchtigkeit ohne Einschränkung vergrößert werden kann.

Erfindungsgemäß wird diese Aufgabe durch die Kombination der Merkmale des Anspruchs 1 gelöst. Ausgehend von einer verfahrbaren Vorrichtung zur Trennung von Aufgabegut, insbesondere Schüttgut, mit einer drehbar gelagerten und mittels einer Antriebseinheit zu einer Drehbewegung antreibbaren Siebtrommel, die auf einem eine Achseinheit aufweisenden Fahrwerk angeordnet ist, einem der Siebtrommel vorgelagerten Aufgabebunker und mit mindestens einem Austragsband, das seitlich zur Längsrichtung der Siebtrommel angeordnet ist, wird erfindungsgemäß das Austragsband, das neben der Siebtrommel angeordnet ist, derart ausgestaltet, dass es von einer Arbeitsstellung, in der es seitlich neben der Siebtrommel liegt, entlang des Siebtrommel in eine Transportstellung verfahrbar ist, die außerhalb des Bereichs der Siebtrommel liegt.

Dieser Erfindung liegt die Erkenntnis zugrunde, dass aufgrund des vorzusehenden Austragsbands neben der Siebtrommel die Gehäuseseitenwände nicht bis zur maximalen Breite des Fahrwerks und damit des Gesamtfahrzeugs vergrößert werden kann. Eine derartige Verbreiterung der Gehäuseseitenwände ist aber wünschenswert, um eine Siebtrommel mit möglichst großem, funktionssicherem Durchmesser einbauen zu können und dadurch die Siebleistung der Gesamtvorrichtung zu vergrößern.

Durch die erfindungsgemäße Lösung, gemäß der das Austragsband von der Arbeitsstellung, in der es seitlich neben der Siebtrommel angeordnet ist, in eine Transportstellung, die außerhalb des Bereichs der Siebtrommel liegt, verschoben wird, ermöglicht nun, einen größeren Siebtrommeldurchmesser bei ausreichender Luft zu den Seitenwänden, wobei die Seitenwände die maximale Fahrzeugbreite einnehmen können. Soweit die Vorrichtung nämlich in der Arbeitsstellung verharrt, sind keine maximalen Abmessungen in der Breite zu berücksichtigen. In der Transportstellung dagegen kann das Austragsband in eine Stellung verfahren werden, in der die Vorrichtung mit seitlichem Austragsband weniger breit ist als die Siebtrommel mit Gehäuseseitenwänden.

Bevorzugte Ausgestaltungen der Erfindung ergeben sich aus den sich an den Hauptanspruch anschließenden Unteransprüchen.

Demnach kann das Austragsband gemeinsam mit der Achseinheit des Fahrwerks gegenüber der Siebtrommel verfahren werden. Durch die Kupplung des Austragsbands mit der Achseinheit des Fahrwerks ist ein Verfahren des Austragsbands möglich, ohne dass die Achseinheit des Fahrwerks im Wege steht. Diese Lösung bietet sich an für den Aufbau der Vorrichtung auf einem Zentralachsanhänger.

Dagegen kann bei einem Aufbau der Vorrichtung auf einem Sattelauflieger das Austragsband ohne Achseinheit verschoben werden, d.h. daß die Achseinheit nicht verschiebbar ist und in ihrer Arbeitsstellung verbleibt.

Gemäß einer weiteren bevorzugten Ausführung der Erfindung liegt das Austragsband in der Transportstellung seitlich neben dem Aufgabebunker.

Vorzugsweise weist die Siebtrommel inklusive Gehäuseseitenwände auch einen Durchmesser auf, der der maximalen Fahrwerksbreite entspricht. Zum Einhalten der maximalen Höhe des Anhängers in der Transportstellung, ist der obere Teil des Austragsbands in der Transportstellung abknickbar ausgebildet.

Die gesamte Vorrichtung kann vorteilhaft als verfahrbarer Anhänger mit Anhängerkupplung ausgebildet sein. In diesem Fall ist er als Zentralachsanhänger ausgebildet. Alternativ kann die Vorrichtung aber auch als Sattelauflieger ausgeführt sein.

Nahe der Anhängerkupplung können Stützen angeordnet sein, so dass die Achseinheit bei stehendem Fahrzeug verfahrbar ist. Während des Verfahrens der Achseinheit stützen die vorgenannten Stützen die gesamte Vorrichtung ab.

Um die gesamte Vorrichtung gegenüber einer sich nicht bewegenden Achseinheit verfahren zu können, können aber auch die vorgenannten Stützen selbst mit Rädern versehen sein.

Im Rahmen der Erfindung ist es aber auch möglich, dass das seitliche Austragsband separat von der Achseinheit verfahren werden kann. Hier könnte das seitliche Austragsband jedoch steuerungstechnisch mit der Achseinheit gekoppelt sein.

Wahlweise kann das seitliche Austragsband rechts oder links angeordnet sein, so dass das entsprechende Siebgut rechts oder links ausgetragen wird, ohne Einschränkungen im Siebbereich zu verursachen. Hierdurch ist ein einfacher Trommelwechsel unabhängig von der Seite des Austragsbandes möglich.

Durch die Verfahrbarkeit der Achseinheit wird die Möglichkeit eröffnet, das seitliche Austragsband auch im vorderen Siebbereich zu positionieren.

Weitere Merkmale, Einzelheiten und Vorteile der Erfindung werden anhand eines in der Zeichnung dargestellten Ausführungsbeispiels erläutert. Es zeigen:
- Figuren 1 bis 3:: Ansichten eines Teils einer erfindungsgemäßen Trommel- siebmaschine in den verschiedenen Ansichten ihrer Arbeits- stellung und
- Figuren 4 bis 6:: eine Darstellung der Maschine gemäß den Figuren 1 bis 3 in ihrer Transportstellung.

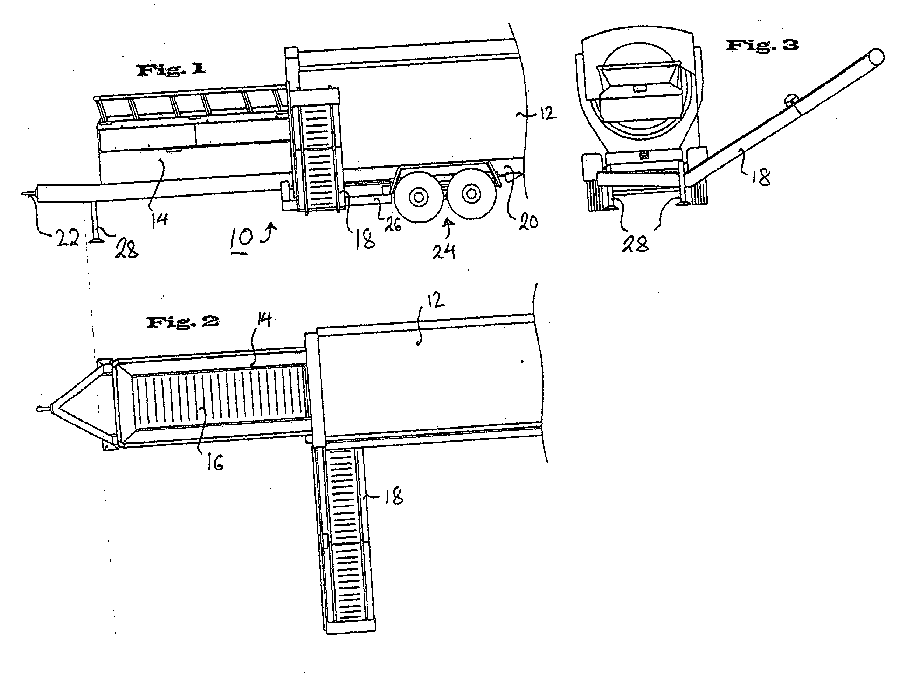

In den Figuren 1 bis 3 ist jeweils nur ein Detail einer verfahrbaren Vorrichtung zur Trennung von Aufgabegut, die im Folgenden verkürzt als Trommelsiebmaschine 10 bezeichnet wird, gezeigt. Wesentlicher Teil der Trommelsiebmaschine 10 ist eine in einem Gestell gelagerte Siebtrommel 12. Vor der Siebtrommel 12 ist ein Aufgabebunker 14 zur Aufnahme des Siebgutes angeordnet. Der Aufgabebunker 14 ist, wie in Figur 2 dargestellt, trichterförmig ausgebildet und weist ein Bunkerförderband 16 auf, über welches das aufgegebene zu siebende Gut in die Siebtrommel 12 gefördert wird. In der Siebtrommel 12 wird das Gut in an sich bekannter Art und Weise gesiebt, wobei das ausgesiebte Feingut über ein Austragsband 18 ausgetragen wird und wobei das Grobgut in einer hier nicht näher dargestellten Art und Weise über ein im Heckbereich der Vorrichtung angeordnetes Austragsband abgefördert werden kann.

Der grundsätzliche Aufbau derartiger Trommelsiebmaschinen ist bereits weitgehend bekannt, so dass hier auf die detailliertere Beschreibung der DE 10 2004 012 778 A1 verwiesen werden kann.

Wie in den Figuren 1 bis 3 gezeigt, ist die Gesamtvorrichtung auf einem Fahrwerk 20 aufgelagert, welches im vorderen Bereich eine Anhängerkupplung 22 aufweist, um an ein Zugfahrzeug angehängt werden zu können. Mit dem Fahrwerk verbunden ist eine Achseinheit 24, die im hier dargestellten Ausführungsbeispiel als Tandemachseinheit ausgebildet ist.

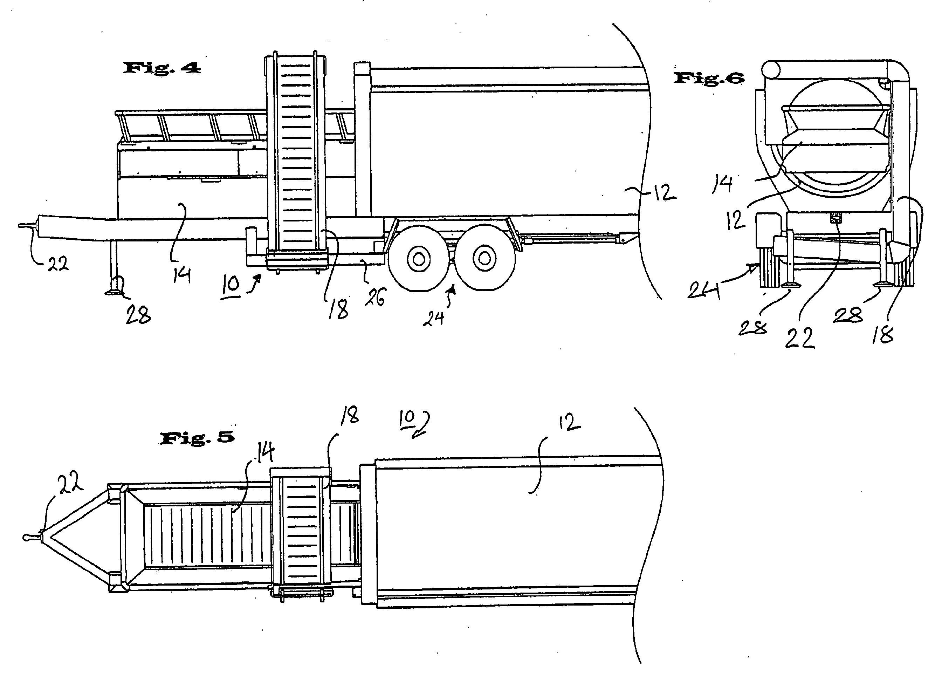

Entsprechend der Erfindung ist die Achseinheit 24 gegenüber dem auf dem Fahrwerk aufgebauten Trommelsieb und dem Aufgabebunker 14 verschiebbar. Dabei werden von der Achseinheit 24 grundsätzlich zwei Positionen eingenommen. Zum einen handelt es sich um die Arbeitsposition, die in den Figuren 1 bis 3 dargestellt ist, in welcher das Fahrwerk zum Heck der Gesamtvorrichtung verschoben ist. Dagegen ist die Achseinheit 24 gemäß der Transportstellung, die in den Figuren 4 bis 6 dargestellt ist, in Richtung zur Anhängerkupplung der Gesamtvorrichtung 10 verschoben.

Mit der Achseinheit 24 ist über eine entsprechende Tragkonstruktion 26 das Austragsband 18 fest verbunden. Das bedeutet, dass mit einer Verschiebung der Achseinheit 24, wie sie zuvor beschrieben wurde, auch das Austragsband 18 gegenüber der Siebtrommel 12 in seiner Position verschoben wird.

Wie in den Figuren 1 bis 3 dargestellt, wird in der Arbeitsposition bei nach hinten verschobener Anordnung der Achseinheit 24 das Austragsband 18 im Bereich der Siebtrommel 12 liegen, so dass entsprechend ausgesiebtes Material über das Austragsband 18 in bekannter Art und Weise abgeführt werden kann.

In der Transportstellung, wie sie in den Figuren 4 bis 6 dargestellt ist, ist das Austragsband 18 zusammen mit der Achseinheit 24 in Richtung zur Anhängerkupplung 22 verschoben, so dass es neben dem Aufgabebunker 14 zu liegen kommt. Insbesondere aus der Figur 6 ist zu ersehen, dass der Aufgabebunker 14 wesentlich schmaler ist als die Siebtrommel 12 mit Gehäuseseitenwänden, so dass hier in der Transportstellung seitlich genügend Platz zur Verfügung steht, um das Transportband 18 innerhalb der maximal zulässigen Abmessungen, im vorliegenden Fall innerhalb der maximal zulässigen Breite, anzuordnen. Da das Austragsband 18 in angeklappter Position höher ist als die maximal zugelassene Höhe, kann es vorteilhaft in seiner Länge abgeklappt werden, wie dies in den Figuren 5 und 6 dargestellt ist. In dieser Position wird also der äußere Teil des Austragsbands 18 um ca. 90° abgeknickt, so dass er parallel zum Fahrwerk der Vorrichtung 10 angeordnet ist.

Wie in den Figuren 1 bis 6 dargestellt ist, ist im vorderen Bereich der Vorrichtung 10, d. h. in Richtung der Anhängerkupplung 22 eine Abstützung in Form von zwei Stützen 28 vorgesehen. Diese ermöglichen es, bei feststehender Vorrichtung 10 die Achseinheit 24 gegenüber der Gesamtvorrichtung von der Arbeitsstellung in die Transportstellung bzw. umgekehrt zu verschieben. In den jeweiligen Stellungen wird die Achseinheit zusammen mit dem starr mit ihr verbundenen Austragsband 18 gegenüber der Vorrichtung fest verriegelt, so dass ein ungewolltes Lösen der Achseinheit vom übrigen Fahrwerk sicher ausgeschlossen wird.

Das Austragsband 18 ist in der vorliegenden Ausführungsvariante in Fahrtrichtung auf der linken Seite angeordnet. Es kann aber in gleicher Weise auch auf der rechten Seite angeordnet sein, so dass hier keine Einschränkungen im Siebbereich verursacht werden. Hierdurch ist auch ein einfacher Trommelwechsel unabhängig von der Anordnung des Austragsbandes möglich.

## Patentansprüche

1. Verfahrbare Vorrichtung (10) zur Trennung von Aufgabegut, insbesondere Schüttgut, mit einer drehbar gelagerten und mittels einer Antriebseinheit zu einer Drehbewegung antreibbaren Siebtrommel (12), die auf einem eine Achseinheit (24) aufweisendem Fahrwerk (20) angeordnet ist, einem der Siebtrommel (12) vorgelagerten Aufgabebunker (14) und mit mindestens einem Austragsband (18), das seitlich zur Längsrichtung der Siebtrommel (12) angeordnet ist,
**dadurch gekennzeichnet,**
**dass** das Austragsband (18) von einer Arbeitsstellung seitlich neben der Siebtrommel (12) entlang der Siebtrommel (12) in eine Transportstellung verfahrbar ist, wobei das Austragsband (18) in der Transportstellung nicht mehr seitlich neben der Siebtrommel (12) liegt.

2. Vorrichtung (10) nach Anspruch 1, **dadurch gekennzeichnet, dass** das Austragsband (18) gemeinsam mit der Achseinheit (24) des Fahrwerks (20) gegenüber der Siebtrommel (12) verfahrbar ist.

3. Vorrichtung (10) nach Anspruch 1 oder 2, **dadurch gekennzeichnet, dass** das Austragsband (18) in der Transportstellung seitlich neben dem Aufgabebunker (14) liegt.

4. Vorrichtung (10) nach einem der vorhergehenden Ansprüche, **dadurch gekennzeichnet, dass** die Siebtrommel (12) inklusive der sie umgebenden Gehäuseseitenwände einen Durchmesser aufweist, der der maximalen Fahrwerksbreite entspricht.

5. Vorrichtung (10) nach einem der vorhergehenden Ansprüche, **dadurch gekennzeichnet, dass** der obere Teil des Austragsbandes (18) in der Transportstellung abknickbar ist.

6. Vorrichtung (10) nach einem der vorhergehenden Ansprüche, **dadurch gekennzeichnet, dass** sie als verfahrbarer Anhänger mit Anhängerkupplung (22) ausgebildet ist.

7. Vorrichtung (10) nach Anspruch 6, **dadurch gekennzeichnet, dass** nahe der Anhängerkupplung (22) Stützen (28) angeordnet sind und dass die Achseinheit (24) bei stehendem Fahrzeug verfahrbar ist.

8. Vorrichtung (10) nach Anspruch 6, **dadurch gekennzeichnet, dass** nahe der Anhängerkupplung (22) mit Rädern versehene Stützen angeordnet sind und dass die gesamte Vorrichtung (10) gegenüber einer sich nicht bewegenden Achseinheit verfahrbar ist.

## Claims

1. Mobile apparatus (10) for separating charging material, in particular bulk material, having a rotatably supported drum screen (12) which can be driven to make a rotary movement by means of a drive unit and which is arranged on an undercarriage (20) which has an axle unit (24), having a charging hopper (14) positioned in front of the drum screen (12) and having at least one output belt (18) which is arranged to the side of the longitudinal direction of the drum screen (12),
**characterised in that**
the output belt (18) is movable from a working position to the side next to the drum screen (12) along the drum screen (12) into a transport position, with the output belt (18) no longer being disposed to the side next to the drum screen (12) in the transport position.

2. An apparatus (10) in accordance with claim 1, **characterised in that** the output belt (18) is movable together with the axle unit (24) of the undercarriage (20) with respect to the drum screen (12).

3. An apparatus (10) in accordance with either of claims 1 or 2, **characterised in that** the output belt (18) is disposed to the side next to the charging hopper (14) in the transport position.

4. An apparatus (10) in accordance with one of the preceding claims, **characterised in that** the drum screen (12), including the side housing walls surrounding it, has a diameter which corresponds to the maximum undercarriage width.

5. An apparatus (10) in accordance with one of the preceding claims, **characterised in that** the upper part of the output belt (18) can be kinked in the transport position.

6. An apparatus (10) in accordance with one of the preceding claims, **characterised in that** it is designed as a mobile trailer with a tow-bar (22).

7. An apparatus (10) in accordance with claim 6, **characterised in that** supports (28) are arranged close to the tow-bar (22); and **in that** the axle unit (24) is movable when the vehicle is stationary.

8. An apparatus (10) in accordance with claim 6, **characterised in that** supports provided with wheels are arranged close to the tow-bar (22); and **in that** the total apparatus (10) is movable with respect to a non-moving axle unit.

## Revendications

1. Dispositif déplaçable (10) destiné à la séparation de matériau de chargement, notamment de produits en vrac, avec un tambour tamiseur (12) tournant sur paliers et entraînable en un mouvement de rotation à l'aide d'une unité d'entraînement, qui est disposé sur un mécanisme de roulement (20) présentant une unité d'axe (24), avec un silo de chargement (14) tournant sur paliers en amont du tambour tamiseur (12) et avec au moins un tapis d'évacuation (18), qui est disposé latéralement par rapport à la direction longitudinale du tambour tamiseur (12),
**caractérisé en ce que**
le tapis d'évacuation (18) est déplaçable latéralement d'une position de travail à côté du tambour tamiseur (12) le long dudit tambour tamiseur (12) dans une position de transport, le tapis d'évacuation (18) ne se trouvant plus latéralement dans la position de transport à côté du tambour tamiseur (12).

2. Dispositif (10) selon la revendication 1, **caractérisé en ce que** le tapis d'évacuation (18) est déplaçable ensemble avec l'unité d'axe (24) du mécanisme de roulement (20) par rapport au tambour tamiseur (12).

3. Dispositif (10) selon la revendication 1 ou 2, **caractérisé en ce que** le tapis d'évacuation (18) se trouve latéralement dans la position de transport à côté du silo de changement (14).

4. Dispositif (10) selon une quelconque des revendications précédentes, **caractérisé en ce que** le tambour tamiseur (12) avec les parois latérales du carter qui l'entourent, présente un diamètre qui correspond à la largeur maximale du mécanisme de roulement.

5. Dispositif (10) selon une quelconque des revendications précédentes, **caractérisé en ce que** la partie supérieure du tapis d'évacuation (18) est désaxable dans la position de transport.

6. Dispositif (10) selon une quelconque des revendications précédentes, **caractérisé en ce qu'**il est agencé comme remorque déplaçable avec crochet d'attelage (22).

7. Dispositif (10) selon la revendication 6, **caractérisé en ce que** près du crochet d'attelage (22), des montants (28) sont disposés, et **en ce que** l'unité d'axe (24) est déplaçable avec véhicule immobilisé.

8. Dispositif (10) selon la revendication 6, **caractérisé en ce que** près du crochet d'attelage (22), des montants dotés de roues sont disposés, et **en ce que** le dispositif complet (10) est déplaçable par rapport à une unité d'axe ne se mettant pas en mouvement.
